# EUROPÄISCHE PATENTSCHRIFT

(11) **EP 2 186 661 B1**
(45) Veröffentlichungstag und Bekanntmachung des Hinweises auf die Patenterteilung: **20.03.2013**
(21) Anmeldenummer: 09012782.0
(22) Anmeldetag: 09.10.2009
(51) Int. Cl.: B60G 11/16, B60G 11/28, B60G 17/02, B62D 17/00, F16F 1/12

(54) **Veränderbare Abstützung einer Schraubendruckfeder oder dergleichen für ein Kraftfahrzeug**
Adjustable support for a helical compression spring or similar for a vehicle
Appui modifiable d'un ressort à boudin de compression ou analogue pour un véhicule automobile

(30) Priorität: 14.11.2008 DE 102008057325
(43) Veröffentlichungstag der Anmeldung: 19.05.2010
(73) Patentinhaber: Audi AG, 85045 Ingolstadt (DE)
(72) Erfinder: Fischer, Siegfried, 85120 Hepberg (DE); Schmitt, Joachim, 85051 Ingolstadt (DE)
(74) Vertreter: Asch, Konrad

(56) Entgegenhaltungen:
- EP-A1- 0 092 066
- EP-A1- 0 985 565
- EP-A1- 1 321 319
- EP-A2- 1 743 784
- DE-A1- 4 340 556
- US-A- 4 946 188
- US-B1- 6 382 645

## Beschreibung

Die Erfindung betrifft eine veränderbare Abstützung einer Schraubendruckfeder oder dergleichen für ein Kraftfahrzeug gemäß dem Oberbegriff des Patentanspruches 1 und 6. Ein Beispiel einer solchen Abstützung ist aus der US 6 382 645 B1 bekannt.

Schraubenddruckfedern werden als Tragfedern bei Kraftfahrzeugen zur Abfederung eingesetzt. Sie bestehen dabei aus einem Federdraht, der mit gleich bleibender oder variabler Steigung im gesamten federungswirksamen Bereich und mit gleich bleibendem oder variablem Windungsdurchmesser um eine Schraubenfedermittelachse gewickelt sind. Dabei ist zumindest ein Federende und/oder beide Federenden an Federunterlagen abgestützt.

Die DE 199 39 515 C2 beschreibt ein Federbein für ein Kraftfahrzeug, bei dem auf einem unteren Federteller ein Stützelement aus einem Kunststoff und zusätzlich eine elastische Unterlage aus einem Gummimaterial verwendet werden. Das Stützelement und die Unterlage sind dabei ringförmig geschlossen.

Ein Federbein mit einstellbarer Abstützung einer Schraubendruckfeder offenbart die DE 100 54 488 A1. Die dort dargestellte Schraubendruckfeder stützt sich an einem Ende der Kolbenstange an einem Federteller und andererseits an einem mit dem Gehäuse eines Schwingungsdämpfers verbundenen Federteller ab. Ein solcher Federteller ist schwenkbar in einem Abstützteil angeordnet und weist eine der jeweiligen Endwindungen der Schraubendruckfeder angepasste Federauflage auf.

Die DE 10 2008 004 089 A1 offenbart eine Schraubenfeder für ein Fahrwerk von Kraftfahrzeugen, die eine Einstellvorrichtung beinhaltet.

Aus der US 4 946188 kann ein MacPherson-Federbein für Automobile entnommen werden, das so aufgebaut ist, dass die Kolbenstange an einem Ende außermittig montiert werden kann.

Eine Radaufhängung mit einem MacPherson-Federberin für die Vorderachse eines Kraftfahrzeugs ist in der DE 43 40 556 A1 offenbart. Die Radaufhängung besteht im Wesentlichen aus einem zwischen Federteller abgestützten Spiral-Federelement auf einem Stoßdämpfer, sowie eine Stützlageraufnahme, welche mittels in Aufnahmebohrungen des Fahrzeugaufbaus gehaltenen Befestigungsbolzen festsetzbar ist. Zwischen dem Spiral-Federelement und der Stützlageraufnahme ist ein Kugellager derart angeordnet, dass die Lageraufnahme gegenüber dem Federelement von einer ersten auf einer in Fahrzeuglängsrichtung gelegenen Achse ausgerichteten Radnachlaufstellung um 180° in eine zweite auf der Achse liegende Rad-Nachlaufstellung verdrehbar ist Für beide Stellungen sind entsprechend hintereinander liegende Aufnahmebohrungen für mehrere Befestigungsbolzen im Fahrzeugaufbau vorgesehen.

Ein wesentliches Merkmal von belasteten Schraubendruckfedern ist die exzentrische Krafteinleitung über die Endflächen in den Federkörper, sowie eine Scherbelastung des Federkörpers hervorgerufen durch die aus der Achskinematik bedingte Scherbewegung der Federauflagen zueinander. Aus dieser Belastung resultieren zusätzliche Beanspruchungen. Zudem ist eine steigende Leistungsdichte im Fahrzeugbau dazu angetan, immer höhere Ansprüche an die einzelnen Maschinenelemente zu stellen. Dabei sind neue Konzepte erforderlich, um diese Leistungsdichten zu erfüllen.

In der Kraftfahrzeugindustrie sind Schraubendruckfedern oder dergleichen Bauteile, die sehr hoch belastet sind. Bei einer solchen Belastung erfahren sie sehr komplexe Beanspruchungen, die in der geometrischen Form des Federdrahtes,dessen Wicklung als auch in dem Scherverhalten der Federunterlage zueinander begründet sind. Gerade in einem Bauteilverbund mit anderen starren Komponenten beeinflussen die Schraubendruckfedern als elastische Komponenten das Systemverhalten maßgeblich.

Ausgehend von dem vorliegenden Stand der Technik liegt der Erfindung die Aufgabe zugrunde, eine Schraubendruckfeder oder dergleichen für Kraftfahrzeuge mit einer Federunterlage bereitzustellen, die eine variable Federposition bei identischen Achsbauteilen und karosserieseitigen Federaufnahmen gestattet.

Gelöst wird die Aufgabe jeweils durch die Merkmale der Ansprüche 1 und 6.

Die Unteransprüche geben eine weitere Ausgestaltung des erfindungsgemäßen Gegenstandes wieder.

Die mechanischen Beanspruchungen der Schraubendruckfedern werden in ihrer Belastung, insbesondere durch die Krafteinleitung über die Wirkflächenpaare bestimmt. Als Wirkflächenpaare werden die Endwindungen der Schraubendruckfeder angesehen. Durch diesen Umstand kann daraus ein außermittiger Lastangriff resultieren, was wieder zur Folge hat, dass in den Endbereichen Querkräfte und Momente erzeugt werden. Diese erzeugten zusätzlichen Spannungen reduzieren die Lebensdauer einer solchen Feder.

Durch die Erfindung, nämlich durch eine auf die Federverformung abgestimmte Umgebungskonstruktion, können die in die Feder eingebrachten Querkräfte und Momente reduziert werden.

So ist es möglich, dass bei einer Scherung des Federkörpers durch die Achskinematik die auftretenden Beanspruchungen gesenkt werden können. Entsprechende Abweichungen von der mittleren Beanspruchung hin zu größeren Werten, kann als zusätzliche Spannung bezeichnet werden. Gerade durch diese zusätzlichen Spannungen wird eine Reduzierung der Lebensdauer der Schraubendruckfeder hervorgerufen.

Die gemäß der vorliegenden Erfindung ausgeführten Exzenterlager sind getrennt ausgebildet. Dabei ist die Federunterlage so gestaltet, dass sie zur Halterung der Schraubendruckfeder oder dergleichen eine fluchtend zu der Mittellinie der Federaufnahme und auch der Schraubendruckfeder ausgerichtete Federhalterung aufweist. Die Verbindung jedoch zur Karosserie oder zum Fahrwerk hin wird durch einen Montageansatz realisiert, der in einem Exzentermaß zu der vor genannter Mittellinie ausgebildet ist. So ist es möglich, dass eine Exzentrizität mittels einer starren Federunterlage geschaffen werden kann. Das Exzentrizitätsmaß kann dabei je nach Fahrzeugtyp variieren. Der Montageansatz wird gegen Verdrehen durch einen Arretierungsansatz so stabilisiert, dass dieser sich nicht um seine eigene Achse drehen kann. Mit einem derartig exzentrisch ausgebildeten Montageansatz ist es möglich, unterschiedliche Positionen beispielsweise innerhalb der Karosserie einzunehmen.

Die Federunterlage hat vorzugsweise einen harten Kern, der von einer Umhüllung umgeben ist, der vorzugsweise aus einem Elastomer oder dergleichen besteht. Montagezapfen und Arretierungszapfen sind vorzugsweise mit einer Spitze ausgerüstet, damit sie in dem Montageprozess schneller montiert werden können.

Der Montageansatz und der Arretierungszapfen bilden einen Formschluss zur Verdrehsicherung für die Federunterlage und können dabei mit einem kreisrunden Querschnitt ausgebildet sein. Der Montageansatz weist dabei vorzugsweise an seinem äußeren Umfang noch Vorsprünge auf, damit bei der Montage innerhalb des Karosseriebleches der Montageansatz sich quasi mit der Karosserie verkrallt. Die Verdrehsicherung kann neben Formschluss zusätzlich auch andere Gestaltungen aufweisen, z. B. Kraftschluss und/oder Stoffschluss.

Um eine derartige Federunterlage auch für unterschiedliche Fahrzeugderivate verwenden zu können, ist es erfindungsgemäß möglich, dass die Federunterlage durch einen Aufsatz oder dergleichen in ihrer Höhenerstreckung verlängert werden kann.

In einer zweiten erfindungsgemäßen Ausführungsform kann der Montageansatz nicht einen kreisrunden Querschnitt aufweisen sondern ist durch zwei parallele Flächen, die an ihren Enden jeweils in halbe Zylinder übergehen, ausgebildet. Eine derartige Ausgestaltung eines Formschlusses zur Verdrehsicherung ist dazu geeignet, dass zumindest in einem als Langloch ausgearbeiteten Durchbruch innerhalb der Karosserie eine vorbestimmt ausgerichtete Position eingenommen werden kann. Dieses mag zwar gegenüber der ersten bevorzugten Ausführungsform eine Einschränkung sein, jedoch ist dies eine Frage der Konstruktion des Fahrzeuges.

Ein weiterer Vorteil besteht insbesondere darin, dass keine Variantenerhöhung von Achsbauteilen und Karosserieteilen notwendig ist. Durch diese Maßnahme ist eine einfache Festlegung der optimalen Federposition für eine maximale Lebensdauer einer derartigen Schraubenfeder gegeben. Gleichzeitig ist jedoch ein Abstimmpotenzial von Fahrwerkseigenschaften durch ein Versetzen der Kraftwirkungslinie der Schraubendruckfeder möglich.

Auch die Verbaumöglichkeit unterschiedlicher Achskonzepte, wie zum Beispiel Luftfeder/Stahlfeder oder Verbundlenkerachsen/Mehrlenkerachsen oder unterschiedliche Lastgruppen in einer Baureihe bei gleichen karosserieseitigen Federaufnahmen ist somit möglich.

Weitere Vorteile, Merkmale und Anwendungsmöglichkeiten der Erfindung ergeben sich aus der nachfolgenden Beschreibung in Verbindung mit dem in den Zeichnungen dargestellten Ausführungsbeispiel.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. Es zeigen:
- Fig. 1: Eine erste bevorzugte Ausführungsform einer Federunterlage in einer Schnittdarstellung mit einer zentrischen Federauf- nahme und dazu exzentrisch angeordnetem Montageansatz;
- Fig. 2: eine Einbausituation der Federunterlage gemäß Figur 1;
- Fig. 3: eine perspektivische Darstellung der Federunterlage gemäß Figur 1;
- Fig. 4: eine Schnittdarstellung der Federunterlage gemäß Figur 1 mit einem Aufsatz;
- Fig. 5: eine zweite bevorzugte Ausführungsform einer Federunterla- ge mit angeschlossener Luftfeder;
- Fig. 6: die Ausführung eines Durchbruches innerhalb einer Karosse- rie für die Federunterlage gemäß Figur 5.

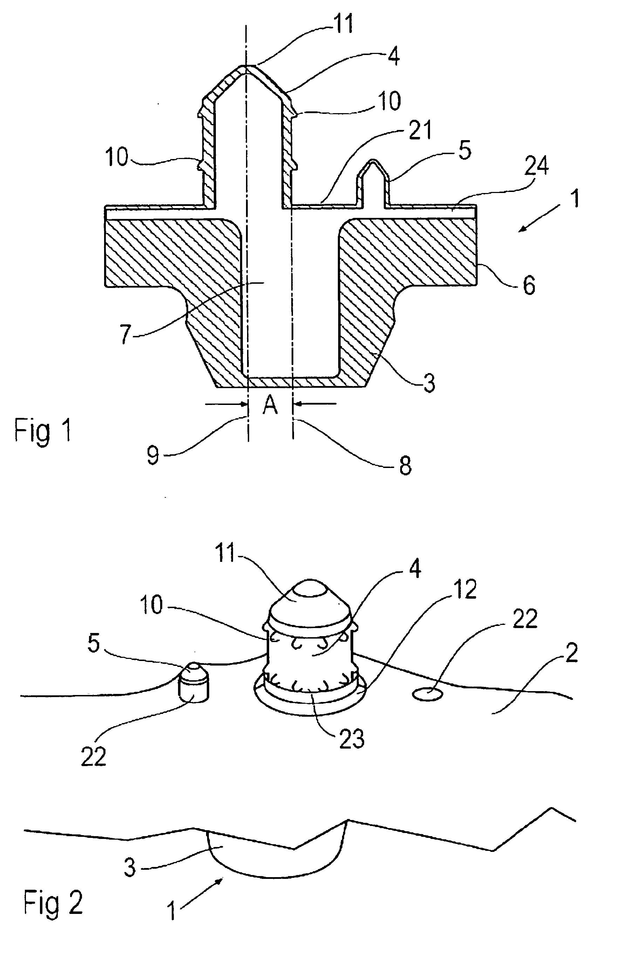

Eine erste bevorzugte Ausführungsform einer Federunterlage 1 wird in Figur 1 dargestellt. In der Schnittdarstellung platziert sich um eine Mittellinie 8 ein Kern 7, der von einer Umhüllung als Federaufnahme 3 umgeben ist. Mit dieser Federaufnahme 3 wird die Verbindung zu der nicht dargestellten Schraubendruckfeder oder dergleichen hergestellt. An den Kern schließt sich ein Teller 24 an, an dem, um ein Exentermaß A versetzt, eine Montageansatzmittellinie 9 ausgewiesen ist. Um die Montageansatzmittellinie 9 herum ist ein Montageansatz 4 ausgebildet, der zur Verwendung an einer Karosserie 2 oder Radaufhängung vorgesehen ist. Damit der Montageansatz 4 auch innerhalb der Karosserie 2 eine feste Verankerung findet, sind auf seinem Umfang Vorsprünge 10 ausgebildet. Neben dem Montageansatz 4 ist auch noch ein Arretierungsansatz 5 vorhanden, der dafür sorgt, dass bei eingesetzter Federunterlage 1 innerhalb der Karosserie 2 hier keine Verdrehung stattfinden kann. Es handelt sich somit um einen Formschluss zur Verdrehsicherung.

Eine Einbausituation einer derartigen Federunterlage 1 gibt die Figur 2 wieder. Dabei ist innerhalb der Karosserie 2 eine Bohrung 23 für den Montageansatz 4 eingebracht. Um eine hiervon unterschiedliche Position, beispielsweise um 180° verdreht, für den Montageansatz 4 und damit direkt für die Federunterlage 1 zu erreichen, sind innerhalb der Karosserie 2 Bohrungen 22 vorhanden. Innerhalb dieser Bohrungen 22 taucht der Arretierungsansatz 5 ein, so dass die Federunterlage 1 sich nicht mehr verdrehen kann.

Aufgrund der konstruktiven Gegebenheiten eines Fahrzeuges ist es möglich, dass neben den zwei gegenüberliegend angeordneten Bohrungen 22 der Figur 2 weitere Bohrungen auf einem Kreisdurchmesser angelegt werden, um so unterschiedliche Einbaupositionen für die Federunterlage zu schaffen.

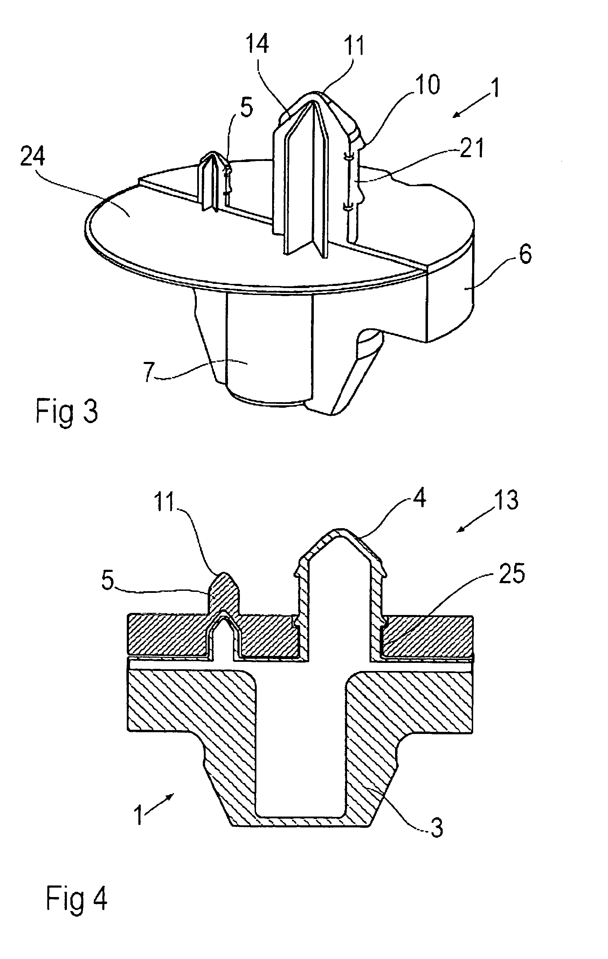

Den grundsätzlichen Aufbau der ersten bevorzugten Ausführungsform der Federunterlage 1 kann in der perspektivischen Darstellung in geschnittener Form auch der Figur 3 noch einmal entnommen werden. Der Kern 7 ist dabei vorzugsweise aus einem härteren Material als beispielsweise die Umhüllung 6 und die Auflagefläche 21, die sich gegen die Karosserie 2 anlegt. Die Umhüllung 6 ist vorzugsweise aus einem Elastomer oder dergleichen.

Um gleiche Federunterlagen 1 auch bei unterschiedlichen Fahrzeugen verwenden zu können, können diese mit einem Aufsatz 13 in der Höhe verändert werden. Dabei ist der Aufsatz 13 so gestaltet, dass er einen Durchbruch für den Montageansatz 4 und vorzugsweise eine Sackbohrung für den Arretierungsansatz 5 aufweist. Zur besseren Montage sind sowohl der Montageansatz 4 als auch der Arretierungsansatz 5 mit Spitzen 11 ausgestattet.

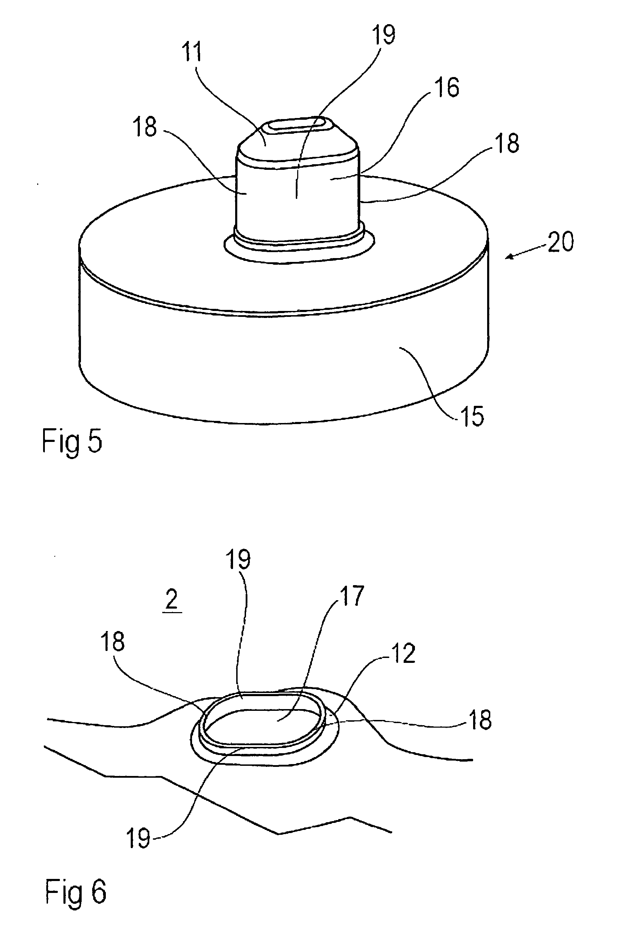

In der Figur 5 wird in einer zweiten bevorzugten Ausführungsform ein Montageansatz 16 wiedergegeben, der an einer Federunterlage 20, beispielsweise für eine Luftfeder 15, angeordnet ist. Prinzipiell kann die Ausführung des Montageansatzes 16 in gleicher Weise auch für die Federunterlage 1 angewendet werden. Dabei weist der Montageansatz 16 zwei parallele äußere Flächen auf, die an den Enden in Halbkreisen 18 zusammengeführt werden. Einer der Halbkreise 18 liegt mit seinem Mittelpunkt auf der Mittellinie 8 der Federunterlage 20. Ein derartiger Montageansatz 16 eignet sich dafür, um in einer Position um 180° verdreht innerhalb der Karosserie 2 eingesetzt zu werden. Dieses zeigt die Figur 6, bei der ein Durchbruch 17 als Langloch für den Montageansatz 16 dargestellt worden ist. Die Karosserie 2 weist am Rand des Durchbruches 17 eine Bördelung 12 auf, die so maßlich abgestimmt ist, dass der Montageansatz 16 beim Einführen fest innerhalb des Durchbruches 17 eintaucht.

### Bezugszeichen

- 1: Federunterlage
- 2: Karosserie
- 3: Federaufnahme
- 4: Montageansatz
- 5: Arretierungsansatz
- 6: Umhüllung
- 7: Kern
- 8: Mittellinie
- 9: Montageansatzmittellinie
- 10: Vorsprünge
- 11: Spitze
- 12: Bördelung
- 13: Aufsatz
- 14: Verstärkungsrippen
- 15: Luftfeder
- 16: Montageansatz
- 17: Durchbruch
- 18: Halbkreis
- 19: parallele Flächen
- 20: Federunterlage
- 21: Auflagefläche
- 22: Bohrung
- 23: Bohrung
- 24: Teller
- 25: Durchbruch
- A: Exzentermaß

## Patentansprüche

1. Veränderbare Abstützung einer Schraubendruckfeder für ein Kraftfahrzeug, deren erstes Federende sich an einer Karosserie (2) oder einem Achsbauteil und deren zweites Federende sich an einer Radaufhängung abstützt, wobei zumindest ein Federende über eine Federunterlage (1) an der Karosserie (2), dem Achsbauteil oder der Radaufhängung anliegt, wobei die Federunterlage (1) zur Halterung der Schraubendruckfeder eine fluchtend zu einer Mittellinie (8) angeordnete Federaufnahme (3) und einem dazu in einem Exzentermaß (A) versetzt ausgebildeten Montageansatz (4) aufweist und, zur Verdrehsicherung mittels Formschluss neben dem Montageansatz (4) ein Arretierungsansatz (5) angeordnet ist, **dadurch gekennzeichnet, dass** die Federunterlage (1) mit einem Aufsatz (13) in ihrer Höhenerstreckung verlängerbar ist.

2. Veränderbare Abstützung nach Anspruch 1, **dadurch gekennzeichnet, dass** das Exzentermaß (A) je nach Fahrzeugtyp variabel ist

3. Veränderbare Abstützung nach einem der vorhergehenden Ansprüche, **dadurch gekennzeichnet, dass** der Montageaufsatz (4) einen kreisrunden Querschnitt aufweist.

4. Veränderbare Abstützung nach einem der vorhergehenden Ansprüche, **dadurch gekennzeichnet, dass** auf dem äußeren Umfang des Montageansatzes (4) Vorsprünge (10) angeordnet sind.

5. Veränderbare Abstützung nach einem der vorhergehenden Ansprüche, **dadurch gekennzeichnet, dass** die Karosserie (2), das Achsbauteil und/oder die Radaufhängung zur Aufnahme der Federunterlage (1) eine dem Montageansatz (4) entsprechende Bohrung (23) und mindestens eine dem Arretierungsansatz (5) entsprechende Bohrung (22) aufweist.

6. Veränderbare Abstützung einer Schraubendruckfeder für ein Kraftfahrzeug, deren erstes Federende sich mit an einer Karosserie (2) oder einem Achsbauteil und deren zweites Federende sich an einer Radaufhängung abstützt, wobei zumindest ein Federende über eine Federunterlage (20) an der Karosserie (2), dem Achsbauteil oder der Radaufhängung anliegt, wobei die Federunterlage (20) einen Montageansatz (16) für eine Feder aufweist, der als Formschluss zur Verdrehsicherung ausgebildet ist, **dadurch gekennzeichnet, dass** der Formschluss zur Verdrehsicherung durch zwei parallele Flächen (19) mit an deren Enden sich anschließenden halben Zylindern (18) ausgebildet ist, wobei einer der halben Zylinder (18) in der Mittelachse (8) der Federunterlage (20) liegt, und dass in der Karosserie (2) ein Durchbruch (17) in Form des Montageansatzes (16) vorhanden ist in dem der Montagesatz einsetzbar ist.

7. Veränderbare Abstützung nach einem der vorhergehenden Ansprüche, **dadurch gekennzeichnet, dass** die Federunterlage (1, 20) durch einen entsprechend gestalteten Formschluss und/oder Kraftschloss und/oder Stoffschluss frei ausrichtbar ist.

8. Veränderbare Abstützung nach einem der vorhergehenden Ansprüche, **dadurch gekennzeichnet, dass** die Federunterlage (1) in unterschiedlichen Positionen montierbar ist.

## Claims

1. Adjustable support for a helical compression spring for a motor vehicle, the first end of which spring is supported on a body (2) or an axle component and the second end of which spring is supported on a wheel suspension, at least one spring end resting on the body (2), the axle component or the wheel suspension via a spring pad (1), the spring pad (1) comprising, for holding the helical compression screw, a spring seat (3) aligned with a centre line (8) and a mounting lug (4) offset therefrom by an eccentric distance (A), and a locking lug (5) for anti-twist protection by means of a positive connection being arranged next to the mounting lug (4), **characterised in that** the height of the spring pad (1) can be extended by an attachment (13).

2. Adjustable support according to claim 1, **characterised in that** the eccentric distance (A) is variable according to vehicle type.

3. Adjustable support according to any of the preceding claims, **characterised in that** the mounting attachment (4) has a circular cross-section.

4. Adjustable support according to any of the preceding claims, **characterised in that** projections (10) are arranged on the outer periphery of the mounting lug (4).

5. Adjustable support according to any of the preceding claims, **characterised in that** the body (2), the axle component and/or the wheel suspension has, for receiving the spring seat (1), a hole (23) corresponding to the mounting lug (4) and at least one hole (22) corresponding to the locking lug (5).

6. Adjustable support for a helical compression spring for a motor vehicle, the first end of which spring is supported on a body (2) or an axle component and the second end of which spring is supported on a wheel suspension, at least one spring end resting on the body (2), the axle component or the wheel suspension via a spring pad (20), the spring pad (20) comprising a mounting lug (16) for a spring, which mounting lug is formed as a positive connection for anti-twist protection, **characterised in that** the positive connection for anti-twist protection is formed by two parallel faces (19) having, at the ends thereof, connecting half-cylinders (18), one of the half-cylinders (18) being located in the centre line (8) of the spring pad (20), and **in that** an opening (17) in the shape of the mounting lug (16) is provided in the body (2), in which opening the mounting set can be inserted.

7. Adjustable support according to any of the preceding claims, **characterised in that** the spring pad (1, 20) can be oriented freely by means of an appropriately designed positive connection and/or non-positive connection and/or integral bond.

8. Adjustable support according to any of the preceding claims, **characterised in that** the spring pad (1) can be mounted in different positions.

## Revendications

1. Appui modifiable d'un ressort à boudin de compression pour un véhicule automobile, la première extrémité du ressort s'appuyant sur une carrosserie (2) ou sur un composant axial et la seconde extrémité du ressort s'appuyant sur une suspension de roue, dans lequel au moins une extrémité du ressort s'applique via une semelle de ressort (1) sur la carrosserie (2), le composant axial ou la suspension de roue, dans lequel la semelle de ressort (1) présente, pour supporter le ressort à boudin de compression, un logement de ressort aménagé dans l'alignement avec une ligne centrale (8) et une pièce rapportée de montage (4) conformée décalée de manière excentrique (A) de celui-ci, et une pièce rapportée d'arrêt (5) est agencée à côté de la pièce rapportée de montage (4) par adaptation de formes pour assurer une solidarité en torsion, **caractérisé en ce que** la semelle de ressort (1) peut être prolongée par un chapeau (13) dans le sens de la hauteur.

2. Appui modifiable selon la revendication 1, **caractérisé en ce que** le degré d'excentricité (A) peut varier en fonction du type de véhicule.

3. Appui modifiable selon l'une quelconque des revendications précédentes, **caractérisé en ce que** la pièce rapportée de montage (4) présente une section transversale circulaire.

4. Appui modifiable selon l'une quelconque des revendications précédentes, **caractérisé en ce que** des saillies (10) sont aménagées sur la périphérie externe de la pièce rapportée de montage (4).

5. Appui modifiable selon l'une quelconque des revendications précédentes, **caractérisé en ce que** la carrosserie (2), le composant axial et/ou la suspension de roue présentent, pour recevoir la semelle de ressort (1) un alésage (23) correspondant à la pièce rapportée de montage (4) et au moins un alésage (22) correspondant à la pièce rapportée d'arrêt (5).

6. Appui modifiable d'un ressort à boudin de compression pour un véhicule automobile, la première extrémité du ressort s'appuyant sur une carrosserie (2) ou un composant axial et la seconde extrémité du ressort s'appuyant sur la suspension de roue, dans lequel au moins une extrémité du ressort s'applique via une semelle de ressort (20) sur la carrosserie (2), le composant axial ou la suspension de roue, dans lequel la semelle de ressort (20) présente une pièce rapportée de montage (16) pour un ressort, qui est conformé avec adaptation de formes pour assurer une solidarité en torsion, **caractérisé en ce que** l'adaptation de formes pour la solidarité en torsion est assurée par deux surfaces parallèles (19) avec des demi-cylindres (18) qui se raccordent à leurs extrémités, dans lequel l'un des demi-cylindres (18) se situe dans l'axe central (8) de la semelle de ressort (20) et **en ce qu'**il y a dans la carrosserie (2) une ouverture (17) sous la forme de la pièce rapportée de montage (16), dans laquelle l'ensemble de montage peut être inséré.

7. Appui modifiable selon l'une quelconque des revendications précédentes, **caractérisé en ce que** la semelle de ressort (1, 20) peut être orientée librement par une adaptation de forme de configuration correspondante et/ou par adhérence à force et/ou par ajustement de matériaux.

8. Appui modifiable selon l'une quelconque des revendications précédentes, **caractérisé en ce que** la semelle de ressort (1) peut être montée dans différentes positions.
